**Europäisches Patentamt**

**European Patent Office**

**Office européen des brevets**

(19)

(11) Veröffentlichungsnummer: **0 216 983**
**A2**

(12)

# EUROPÄISCHE PATENTANMELDUNG

(21) Anmeldenummer: **86102637.5**

(22) Anmeldetag: **28.02.86**

(51) Int. Cl.⁴: **B 23 Q 35/10**

(30) Priorität: **04.10.85 DE 3535425**

(43) Veröffentlichungstag der Anmeldung:
**08.04.87 Patentblatt 87/15**

(84) Benannte Vertragsstaaten:
**AT BE CH DE FR GB IT LI LU NL SE**

(71) Anmelder: **Jürgens KG**
**Augustdorfer Strasse 50**
**D-4815 Stukenbrock(DE)**

(72) Erfinder: **Jürgens, Leo**
**Augustdorfer Strasse 50**
**D-4815 Stukenbrock(DE)**

(74) Vertreter: **Hanewinkel, Lorenz, Dipl.-Phys.**
**Patentanwalt Ferrariweg 17a**
**D-4790 Paderborn(DE)**

(54) **Maschine zur Herstellung profilierter Werkstücke im Durchlaufverfahren.**

(57) Die Maschine zur Herstellung profilierter Werkstücke (2) im Durchlaufverfahren weist eine Bearbeitungseinheit (4), wie motorisch angetriebene Fräswerkzeuge, und eine das/die zu profilierenden Werkstücke (2) lagefixiert aufnehmenden, mit den Werkstücken (2) in Durchlaufrichtung (A) bewegbaren Schalbone (3) auf, durch die die Bearbeitungseinheit (4) für die Profilierung der Werkstücke 82) während des Durchlaufes zwangsgesteuert wird.

Die Schablone (3) ist in einer geradlinigen Führungsbahn (5) in Durchlaufrichtung (A) für die Profilierung und entgegen der Durchlaufrichtung (A) für die Rückführung in die Werkstück-Aufnahmestellung (Ausgangsstellung) automatisch verschiebbar angeordnet.

Fig.1

**EP 0 216 983 A2**

Maschine zur Herstellung profilierter
Werkstücke im Durchlaufverfahren

Die Erfindung bezieht sich auf eine Maschine zur Herstellung profilierter Werkstücke im Durchlaufverfahren, mit einer oder mehreren Bearbeitungseinheit (en), wie Fräswerkzeugen, und einer ein oder mehrere zu profilierende Werkstücke aufnehmenden, mit den Werkstücken in Durchlaufrichtung bewegbaren Schablone, durch die die Bearbeitungseinheit für die Profilierung der Werkstücke während des Durchlaufes zwangsgesteuert wird.

Bei einer derartigen Maschine wird ein Werkstück oder werden zwei oder mehrere Werkstücke übereinanderliegend von Hand in die Schablone eingelegt und dann wird die Schablone mit den Werkstücken in die Bearbeitungseinheit so weit eingeschoben, bis die Druckwalzen der Bearbeitungseinheit die Schablone mit den Werkstücken durch die Bearbeitungseinheit hindurchziehen und dabei erfolgt die Profilierung.

Ist die Schablone durch die Bearbeitungseinheit hindurchgelaufen, so übernimmt eine zweite Bedienungsperson die Schablone, nimmt die Werkstücke heraus und gibt die Schablone der ersten Bedienungsperson zurück.

Dieser Arbeitsvorgang ist sehr zeitaufwendig und erfordert immer zwei Bedienungspersonen, was eine unrationelle Herstellung ergibt.

Weiterhin werden mehrere Schablonen benötigt, damit die erste Bedienungsperson bereits eine Schablone zum Einlegen der Werkstücke zur Hand hat, wenn die erste Schablone sich noch im Arbeitsprozeß befindet, da sonst eine noch längere Wartezeit bis zum Zurückgeben anfallen würde.

Es sind bei derartigen Maschinen bereits Rückführeinrichtungen für die Schablonen angebaut worden, die sich aus zusätzlichen Transportbändern zusammensetzen und die Schablonen auf einem langen, winkelförmigen Weg zur Bedienungsseite zurückbewegen. Diese zusätzliche Rückführeinrichtung ist jedoch technisch aufwendig und kostspielig und bringt nicht den gewollten Effekt, da die Rückführzeit noch erheblich hoch ist.

Aufgabe der Erfindung ist es deshalb, die nach der eingangs genannten Art aufgebaute Maschine dahingehend zu verbessern, daß mit einer Schablone gearbeitet werden kann und diese Schablone auf sehr kurzem Bewegungsweg automatisch in die Beschickungsstellung mit neuen Werkstücken zurückgebracht werden kann, wobei diese Maschine nur eine Bedienungsperson erfordert und eine sehr hohe Durchsatzleistung ergibt.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte Weiterbildungen der Aufgabenlösung darstellen.

Der Gegenstand der Erfindung erstreckt sich nicht nur auf die Merkmale der einzelnen Ansprüche, sondern auch auf deren Kombination.

Durch die erfindungsgemäße Maschine ist ein rationelles Bearbeiten von Werkstücken mit folgenden Vorteilen erzielt worden:

1. Die Maschine arbeitet mit nur einer Schablone,

2. die Schablone wird auf demselben Weg zurückbewegt, der für den Durchlauf zur Profilierung benutzt wird,

3. die Schablone wird somit auf einer geradlinigen und sehr kurzen Bahn in eine Richtung für die Bearbeitung verfahren und in die entgegengesetzte Richtung zurück in die Ausgangs- und Bestückstellung verfahren und dieses Verfahren erfolgt automatisch,

4. dieses Hin- und Herfahren der Schablone ist durch ein einfaches und sicher wirkendes Verschiebeorgan, vorzugsweise einen kolbenstangenlosen Druckmittelzylinder, ermöglicht worden, so daß für die Schablonenrückführung gleichzeitig der automatische Vorschub ausgenutzt wird und dadurch keine wesentlichen Mehrkosten für die automatische Rückführung anfallen,

5. die Maschine benötigt nur eine einzige Bedienungsperson, die lediglich ein Magazin mit den Rohwerkstücken füllen und dann die fertigbearbeiteten Werkstücke für die Verpackung entnimmt; der gesamte Arbeitsablauf und die Rückführung der Schablone erfolgt automatisch,

6. mit der herkömmlichen Maschine konnten zwei Bedienungspersonen pro Tag 1000 Werkstücke herstellen und mit der erfindungsgemäßen Maschine ist mit nur einer Person pro Tag die Fertigung von 2000 Werkstücken möglich, was bei Personaleinsparung eine doppelte Produktion ergibt,

7. die gesamte Maschine ist einfach aufgebaut, leicht in der Bedienung und ermöglicht ein wirtschaftliches Herstellen profilierter Werkstücke aus den verschiedensten Werkstoffen, wie Holz, Holzwerkstoff, Kunststoff, Metall od. dgl.,

8. durch das automatisch die für die Profilierung zu bearbeitenden Werkstücke freigebende Magazin und den Schieber sowie das Abführband ist ein automatischer und kontinuierlicher Arbeitsablauf erreicht worden, der bei hoher Durchsatzleistung und nur einer Bedienungsperson ein ausschußfreies Fertigen ermöglicht.

Anhand der Zeichnungen wird nachfolgend ein Ausführungsbeispiel gemäß der Erfindung näher erläutert. Es zeigt:

Fig. 1 eine schematische Seitenansicht einer Maschine zur Herstellung profilierter Werkstücke im Durchlaufverfahren mit einer in geradliniger Durchlaufrichtung hin- und herverfahrbaren, die Werkstücke aufnehmenden und eine Bearbeitungseinheit zwangssteuernden Schablone,

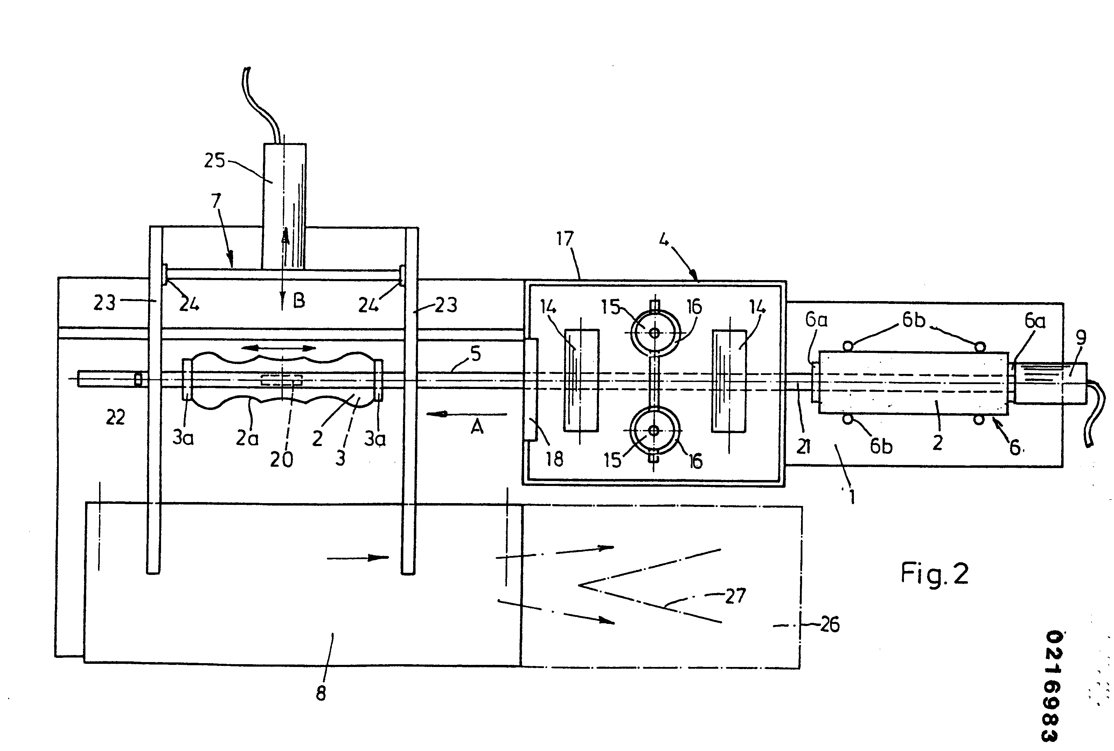

Fig. 2 eine schematische Draufsicht auf dieselbe Maschine,

Fig. 3 eine Seitenansicht der Schablone mit aufgenommenen Werkstücken und sie verschiebenden Druckmittelzylinder,

Fig. 4 eine Seitenansicht im teilweisen Schnitt eines Doppelschiebers für das Bewegen der profilierten Werkstücke auf eine Abführbahn,

Fig. 5 eine Seitenansicht im teilweisen Schnitt einer an einem Magazin angeordneten Halteeinrichtung für die auf die Schablone abzugebenden Werkstücke.

Mit 1 ist ein Maschinengestell einer Maschine zur Herstellung profilierter Werkstücke 2 im Durchlaufverfahren bezeichnet, wobei diese Werkstücke 2 an den beiden sich gegenüberliegenden Längskanten (Breitseiten) während des Durchlaufes durch Fräsen, Schleifen od. dgl. profiliert werden. Die Werkstücke 2 sind in bevorzugter Weise platten- oder leistenförmig ausgebildet und können aus Holz, Holzwerkstoff, Kunststoff, Metall, wie Leichtmetall od. dgl. bestehen und erhalten während des Durchlaufes durch spanabhebende Bearbeitung ihre Profilierung; z. B. werden die brettförmigen Werkstücke zu Balkongeländerbrettern oder anderen Werkstücken mit Kantenprofil profiliert.

Eine der jeweiligen Werkstückform (Längskantenprofilierung) ausgebildete Schablone 3 nimmt ein, zwei oder mehrere übereinanderliegende (deckungsgleich übereinanderliegende) Werkstücke 2 lagefixiert auf und mit dieser Schablone 3 werden das bzw. die Werkstücke 2 für die Profilierung durch eine Bearbeitungseinheit 4 der Maschine bewegt, wobei die Schablone 3 in einer geradlinigen Führungsbahn 5 in und entgegen der Durchlaufrichtung "A" automatisch geführt ist.

Auf dem Maschinengestell 1 ist ein eine Vielzahl an übereinanderliegender Werkstücke 2 aufnehmendes Magazin 6 angeordnet und in Durchlaufrichtung "A" dahinter die Bearbeitungseinheit 4 und dahinter ein die profilierten Werkstücke 2 quer zur Durchlaufrichtung "A" auf ein Abführband 8 bewegender Schieber 7 vorgesehen. Das Magazin 6 liegt in einem Endbereich und der Schieber 7 im anderen Endbereich des Maschinengestelles 1 und das Abführband 8 verläuft parallel zur Durchlaufrichtung "A", jedoch in entgegengesetzter Bewegungsrichtung. Der Schieber 7 bewegt sich in Querrichtung "B" hin und her.

Das Magazin 6 besitzt zwei in Durchlaufrichtung mit einstellbarem Abstand zueinander angeordnete aufrechte Fixierwände 6a, an die sich die beiden Längenenden der Werkstücke 2 anlegen, und mehrere auf beiden Seiten der Werkstücke 2 angeordnete, aufrechte Anlagestangen 6b für die Fixierung der Werkstücke 2 in Breitenrichtung, die ebenfalls im Abstand zueinander auf die jeweilige Werkstückbreite einstellbar sind. In diesem Magazin 6 sind somit die übereinanderliegenden Werkstücke 2 lagegesichert gehalten.

An der in Durchlaufrichtung "A" hinteren Fixierwand 6a ist ein Druckmittelzylinder 9 gelagert, der die übereinanderliegenden Werkstücke 2 bis auf das unterste oder zwei oder drei unterste Werkstücke 2, die aus dem Magazin 6 für die Bearbeitung herausgefahren werden sollen, festklemmt. Wenn das oder die Werkstücke 2 für die Bearbeitung aus dem
Magazin 6 herausgefahren worden sind, dann gibt der Druckmittelzylinder 9 die Werkstücke 2 frei und sie können dann nach unten nachfallen;
danach erfolgt sofort wieder das Festklemmen der Werkstücke 2 bis auf
die anschließend herausfahrbaren Werkstücke 2.

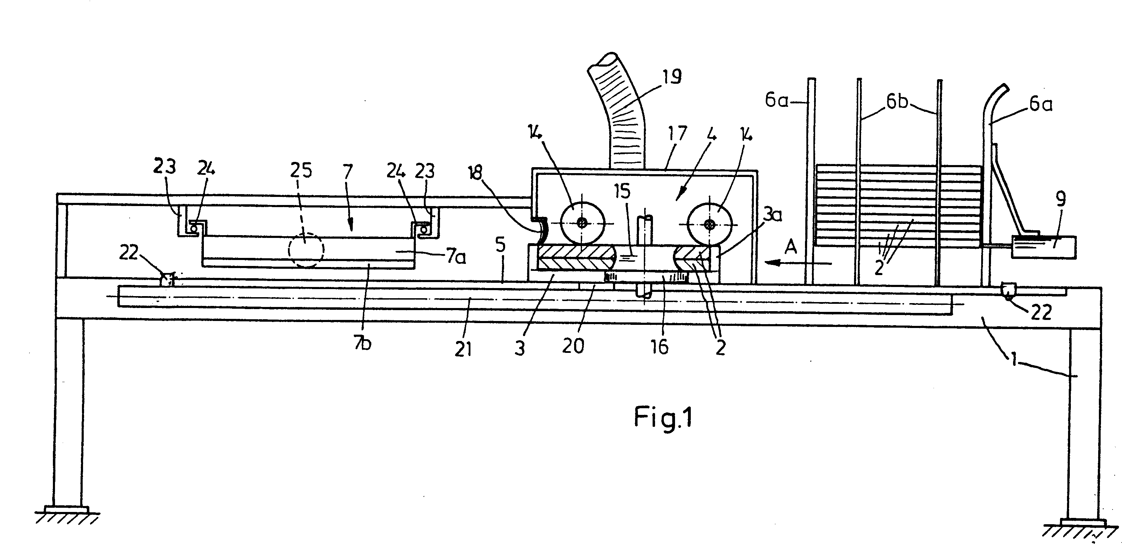

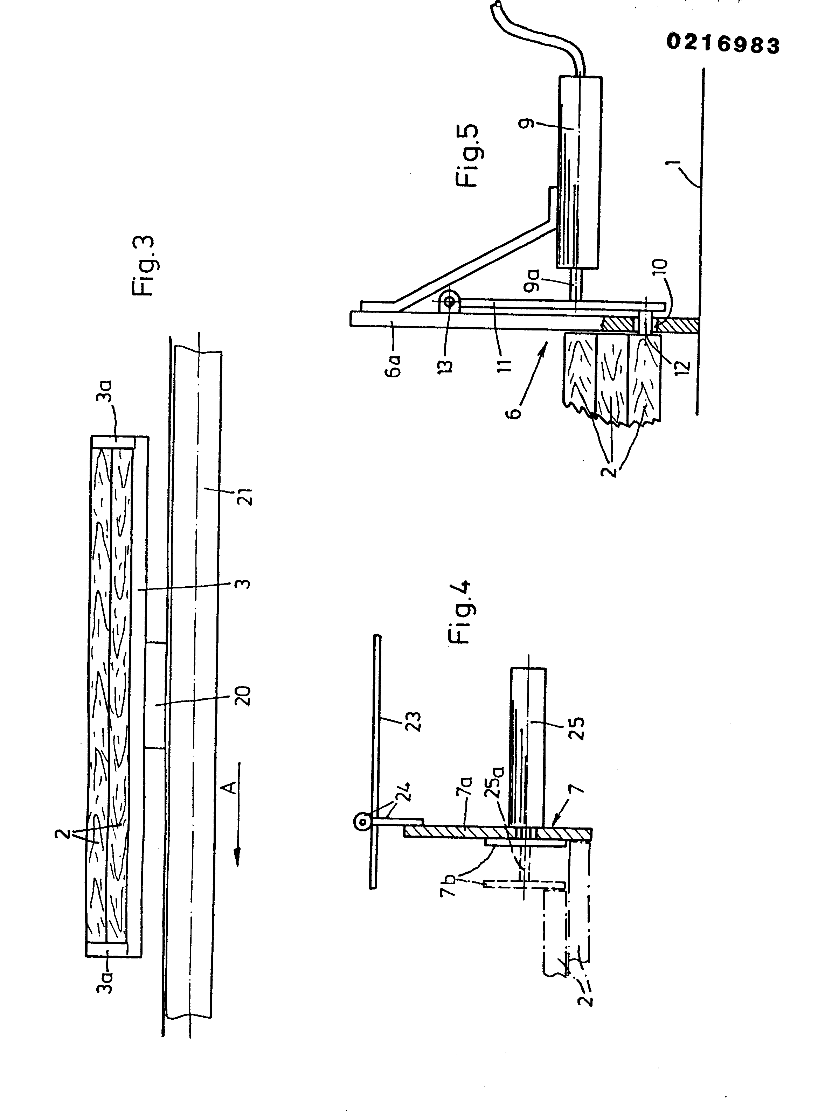

Der im Abstand oberhalb der Bewegungsbahn der Schablone 3 und auch
oberhalb der Schablone 3 an der Fixierwand 6a gelagerte Druckmittelzylinder 9 kann mit seiner in Durchlaufrichtung "A" verschiebbaren Kolbenstange 9a direkt auf das Stirnende eines Werkstückes 2 einwirken,
indem die Kolbenstange 9a durch eine Öffnung 10 in der Fixierwand 6a
greift, oder aber auf ein Klemmstück 11 mit Klemmbolzen 12 einwirken,
wobei dieses Klemmstück 11 um eine waagerechte Achse 13 schwenkbar
an der Fixierwand 6a gehalten ist und mit seinem Klemmbolzen 12 durch
die Öffnung 10 greift und gegen die Stirnseite eines Werkstückes 2
drückt (vgl. Fig. 1 und 5). Der Druckmittelzylinder 9 allein oder in Verbindung mit dem Klemmstück 11,12 bildet eine Halte- bzw. Sperreinrichtung.

Die Bearbeitungseinheit 4 besitzt zwei in Durchlaufrichtung "A" im Abstand hintereinander angeordnete, quer zur Durchlaufrichtung drehbare
Druckwalzen 14, die auf die Oberseite des durchlaufenden Werkstückes
2 einwirken und es transportieren. Zwischen den beiden Druckwalzen 14
sind zwei quer zur Durchlaufrichtung gegeneinander verschiebbare Werkzeuge 15, vorzugsweise Fräser, angeordnet, die jeweils um eine aufrechte
Achse verdrehbar sind und mit denen die Profilierung an den beiden
Längsseiten des (der) Werkstückes (Werkstücke) 2 erfolgt. Jedes Werkzeug 15 besitzt eine Tastrolle 16, die an der Schablone 3 abläuft und
dadurch das Werkzeug 15 entsprechend der Profilform steuert.

Um die Druckwalzen 14 und Werkzeuge 15 ist eine Schutzhaube 17 angeordnet, und an der Austrittseite besitzt die Schutzhaube 17 eine Bürste 18 od. dgl., mit der die Späne von dem Werkstück 2 entfernt werden; weiterhin ist an die Schutzhaube 17 eine Absaugleitung 19 für die Späne und den Staub angeschlossen.

Die Schablone 3 ist von einer Platte gebildet, welche an ihren beiden Längskanten die Profilform aufweist und an ihren beiden Stirnenden jeweils einen aufrechten Fixiersteg 3a hat, so daß das Werkstück 2 in Längsrichtung fixiert und von der Schablone 3 mitgenommen wird. Die Höhe der Fixierstege 3a richtet sich nach der Anzahl der übereinander auf der Schablone 3 anzuordnenden Werkstücke 2. Es ist bevorzugt, auf die Schablone 3 ein, zwei oder mehrere Werkstücke 2 aufzulegen, so daß entweder nur ein Werkstück 2 oder aber bei einem Durchlauf gleichzeitig zwei oder mehrere Werkstücke 2 bearbeitet werden.

Die Schablone 3 ist über einen Mitnehmer 20 mit einem in beide Richtungen wirkenden Verschiebeorgan 21, vorzugsweise kolbenstangenlosen Druckmittelzylinder, verbunden, der sich unterhalb der Führung 5 in Durchlaufrichtung "A" im Maschinengestell 1 erstreckt und eine Länge hat, die vom Magazin 6 bis zum Schieber 7 reicht. Der Mitnehmer 20 ist in der von einer Nut gebildeten Führung 5 verschiebbar geführt.

In den beiden Längenendbereichen des Druckmittelzylinders 21 ist jeweils ein elektrischer Endschalter 22 zur Steuerung des Druckmittelzylinders 21 angeordnet, der jeweils in den Endstellungen von der Schablone 3 betätigt wird.

Im Abstand hinter der Bearbeitungseinheit 4 ist der Schieber 7 angeordnet, der an quer zur Durchlaufrichtung "A" verlaufenden Führungen 23 des Maschinengestelles 1 mittels Laufwagen 24 oder Schlitten motorisch hin und her verschiebbar ist.

Der Schieber 7 ist in bevorzugter Weise als Doppelschieber ausgebildet, d.h., er besitzt zwei aneinanderliegende Schieberplatten 7a, 7b, von denen die Schieberplatte 7a mittels der Laufwagen 24 oder Schlitten an den oberhalb des Durchlaufbereiches der Schablone 3 verlaufenden Führungen 23 aufgehängt ist, und die zweite Schieberplatte 7b vor der ersten Schieberplatte 7a liegt und mit dieser verfahren wird, jedoch auch noch zusätzlich verfahren werden kann. Hierfür ist an der ersten Schieberplatte 7a ein Druckmittelzylinder 25 gelagert, an dessen durch diese Schieberplatte 7a hindurchgreifenden Kolbenstange 25a die zweite Schieberplatte 7b befestigt ist.

Dieser Doppelschieber 7 ist insbesondere für das Verschieben von zwei übereinanderliegenden und bearbeiteten Werkstücken 2 von der Schablone 3 auf das Abführband 8 vorgesehen, wobei die beiden Schieberplatten 7a, 7b aneinanderliegen und gemeinsam verfahren werden. Sind die beiden Werkstücke 2 auf das Abführband 8 geschoben worden, dann wird die vordere Schieberplatte 7b wirksam und durch den Druckmittelzylinder 25 weiter verschoben, wodurch dann das obere Werkstück 2 vom unteren Werkstück 2 heruntergeschoben wird, so daß dann die beiden Werkstücke 2 vereinzelt nebeneinander auf dem Abführband 8 liegen. Hierfür ist die vordere Schieberplatte 7b in der Höhe um mindestens die Werkstückstärke des untenliegenden Werkstückes 2 verringert, wodurch sie nur auf das obere Werkstück 2 einwirken kann (vgl. Fig. 4). Auch läßt sich die vordere Schieberplatte 7b gegenüber der hinteren Schieberplatte 7a höhenverstellbar vorsehen.

Ist nur ein Werkstück 2 von der Schablone 3 zu verschieben, dann wird die Funktion des Druckmittelzylinders 25 ausgeschaltet und beide Schieberplatten 7a, 7b liegen aneinander und verschieben gemeinsam das einzelne Werkstück 2 bis auf das Abführband.

Das Abführband 8 ist von einem motorisch angetriebenen, endlos umlaufenden Transportband gebildet und arbeitet taktweise oder kontinuierlich.

An das Abführband 8 läßt sich ein Aufnahmetisch 26 anstellen, auf den die bearbeiteten Werkstücke 2 für die Verpackung fallen. Um dabei die Werkstücke 2 mit Abstand nebeneinanderliegend zu erhalten, ist der Aufnahmetisch 26 mit einem V-förmigen Trennstück 27 ausgestattet, gegen das die beiden nebeneinanderliegenden Werkstücke 2 laufen und dann auseinandergeschoben werden.

Die Arbeitsweise der erfindungsgemäßen Maschine ist folgende:

Die Schablone 3 ist durch den Druckmittelzylinder 21 in die Ausgangsstellung unter das Magazin 6 gefahren. Die Werkstücke 2 werden von Hand in das Magazin 6 eingebracht und das unterste bzw. die beiden untersten Werkstücke 2 fallen in die Schablone 3, wenn der Druckmittelzylinder 9 sie freigibt. Nach dieser Freigabe wirkt der Druckmittelzylinder 9 sofort wieder auf das darüberliegende Werkstück 2 ein und hält alle darüberliegenden Werkstücke 2 so lange in der Höhe fest, bis die Schablone 3 mit dem oder den Werkstücken 2 aus dem Magazin 6 herausgefahren und nach der Bearbeitung wieder in die Ausgangsstellung unter das Magazin 6 zurückgefahren ist.

Ist die Schablone 3 mit einem oder zwei Werkstücken 2 bestückt, erhält der Druckmittelzylinder 21 einen Impuls und verfährt die Schablone 3 mit Werkstücken 2 in Durchlaufrichtung "A" zu der Bearbeitungseinheit 4. Sobald die erste Druckwalze 14 die Werkstücke 2 erfaßt hat, wird der Druckmittelzylinder 21 wirkungslos und die Druckwalzen 14 übernehmen den Transport der Schablone 3 mit Werkstücken 2, wobei der Druckmittelzylinder 21 mitläuft. Beim Durchlauf durch die Bearbeitungseinheit 4 erstellen die Werkzeuge 15, gesteuert durch die an der Schablone 3 ablaufenden Tastrollen 16, die beidseitige Profilierung 2a an den Werkstücken 2. Sobald die Hinterkante der Werkstücke 2 die zweite Druckwalze 14 verlassen hat, übernimmt der Druckmittelzylinder 21 wieder den Transport der Schablone 3 mit profilierten Werkstücken 2 und fährt diese bis unter den Schieber 7 und dabei gegen den Endschalter 22.

Nun verfährt der Schieber 7 in Querrichtung "B" und schiebt die Werkstücke 2 von der Schablone 3 herunter bis auf das Abführband 8. Nun fährt die Schablone 3 mittels des von Endschalter 22 einen Impuls erhaltenden Druckmittelzylinder 21 bis in die Ausgangsstellung unter das Magazin 6 zurück. Bei dieser geradlinigen Rückfahrbewegung der Schablone 3 sind die beiden Werkzeuge 15 auseinandergefahren, so daß die Schablone 3 störungsfrei zwischen den Werkzeugen 15 hindurch kann. Stößt die Schablone 3 unterhalb des Magazines 6 gegen den Endschalter 22, wird der Zylinder 21 umgeschaltet und gleichzeitig gibt der Druckmittelzylinder 9 die Werkstücke 2 frei, so daß ein oder zwei Werkstücke 2 in die Schablone 3 fallen können und dann beginnt derselbe Durchlauf.

Nachdem die Schablone 3 bei der Rückfahrbewegung die Werkzeuge 15 passiert hat, fahren diese wieder in die Arbeitsstellung zusammen, so daß sie für den nächsten Arbeitsgang in Wartestellung stehen.

Für die Bewegungsabläufe der Druckmittelzylinder 9,21,25 und der Werkzeuge 15 sowie des Abführbandes 8 und des Schiebers 7 ist eine elektrische und elektronische Steuereinheit vorgesehen, die die Bewegungen aufeinander abgestimmt steuert.

Patentansprüche

1. Maschine zur Herstellung profilierter Werkstücke im Durchlaufverfahren, mit einer Bearbeitungseinheit, wie motorisch angetriebenen Fräswerkzeugen, und einer das/die zu profilierenden Werkstücke lagefixiert aufnehmenden, mit den Werkstücken in Durchlaufrichtung bewegbaren Schablone, durch die die Bearbeitungseinheit für die Profilierung der Werkstücke während des Durchlaufes zwangsgesteuert wird, dadurch gekennzeichnet, d a ß die Schablone (3) in einer geradlinigen Führungsbahn (5) in Durchlaufrichtung (A) für die Profilierung und entgegen der Durchlaufrichtung (A) für die Rückführung in die Werkstück-Aufnahmestellung (Ausgangsstellung) automatisch verschiebbar angeordnet ist.

2. Maschine nach Anspruch 1, dadurch gekennzeichnet, d a ß die Schablone (3) über einen Mitnehmer (20) mit einem Verschiebeorgan, vorzugsweise einen kolbenstangenlosen Druckmittelzylinder (21), verbunden ist.

3. Maschine nach Anspruch 1 und 2, dadurch gekennzeichnet, d a ß die Führungsbahn (5) von einer den Mitnehmer (20) geführt aufnehmenden Nut gebildet ist, unter der der Druckmittelzylinder (21) in dem Maschinengestell (1) lagert.

4. Maschine nach den Ansprüchen 1 bis 3, dadurch gekennzeichnet, d a ß das Maschinengestell (1) in Durchlaufrichtung (A) hintereinander ein Magazin (6) für die Werkstücke (2), die Bearbeitungseinheit (4), einen quer zur Durchlaufrichtung (A) wirkenden Schieber (7) und ein parallel zur Durchlaufrichtung (A), jedoch entgegen der Durchlaufrichtung (A), endlos umlaufendes Abführband (8) für die profilierten Werkstücke (2) aufnimmt.

5. Maschine nach den Ansprüchen 1 bis 4, dadurch gekennzeichnet, d a ß der Druckmittelzylinder (21) der Schablone (3) sich in Durchlaufrichtung vom Magazin (6) bis zum Schieber (7) erstreckt.

6. Maschine nach den Ansprüchen 1 bis 5, dadurch gekennzeichnet, d a ß die Bearbeitungseinheit (4) innerhalb einer Schutzhaube (17) zwei oder mehrere in Durchlaufrichtung (A) im Abstand hintereinander angeordnete und quer zur Durchlaufrichtung (A) verdrehbare Druckwalzen (14) und zwei oder mehrere um aufrechte Achsen drehbare, zwischen den Druckwalzen (14) angeordnete und quer zur Durchlaufrichtung (A) gegeneinander bewegbare Werkzeuge (15), vorzugsweise Fräser, mit jeweils einer mit der Schablone (3) zusammenwirkenden Tastrolle (16) aufweist.

7. Maschine nach den Ansprüchen 1 bis 6, dadurch gekennzeichnet, d a ß in beiden Längenendbereichen der sich über die gesamte Länge des Druckmittelzylinders (21) vom Magazin (6) bis zum Schieber (7) erstreckenden Führungsbahn (5) ein Endschalter (22) für die Bewegungsumsteuerung des Druckmittelzylinders (21) angeordnet ist.

8. Maschine nach den Ansprüchen 1 bis 7, dadurch gekennzeichnet, d a ß der Druckmittelzylinder (21) derart elektrisch gesteuert ist, daß er im Transportbereich der Druckwalzen (14) wirkungslos wird, den Druckwalzen (14) den Transport der Schablone (3) mit Werkstücken (2) überläßt und frei mitfährt und vor und hinter den Druckwalzen (14) als Transportmittel wirkt.

9. Maschine nach den Ansprüchen 1 bis 8, dadurch gekennzeichnet, d a ß die beiden Werkzeuge (15) der Bearbeitungseinheit (4) bei der Rückfahrbewegung der leeren Schablone (3) automatisch auseinanderfahrbar ausgeführt sind.

10. Maschine nach den Ansprüchen 1 bis 9, dadurch gekennzeichnet, d a ß das Magazin (6) an einer Magazinwandung (6a) einen mit seiner Kolbenstange (9a) unmittelbar oder über ein schwenkbares Klemmstück (11) mit Klemmbolzen (12) auf die Stirnseite des unmittelbar oberhalb des oder der aus dem Magazin (6) durch die Schablone (3) herausfahrbaren Werkstücke (2) liegenden Werkstückes (2) (klemmend und höhenlagehaltend) einwirkenden und diese Werkstücke (2) erst nach der Rückfahrbewegung der leeren Schablone (3) unter das Magazin (6) zur Abgabe freigebenden Druckmittelzylinder (9) aufweist (Fig. 5).

11. Maschine nach den Ansprüchen 1 bis 10, dadurch gekennzeichnet, d a ß der Schieber (7) mittels Laufwagen (24) oder Schlitten an querverlaufenden Führungen (23) des Maschinengestelles (1) verfahrbar aufgehängt ist und als Doppelschieber mit zwei aneinanderliegenden Schieberplatten (7a,7b) ausgebildet ist, die gemeinsam die übereinanderliegenden, profilierten Werkstücke (2) aus der Schablone (3) heraus auf das Abführband (8) bewegen und von denen die eine Schieberplatte (7b) über einen an der anderen Schieberplatte (7a) gelagerten Druckmittelzylinder (25) für die Vereinzelung der aufeinanderliegenden Werkstücke (2) gegenüber der Schieberplatte (7a) verschiebbar ist (Fig. 4).

0216983

Fig.1

Fig. 2

0216983

Fig.3

Fig.4

Fig.5